# EUROPEAN PATENT SPECIFICATION

(11) **EP 0 333 246 B1**
(45) Date of publication and mention of the grant of the patent: **05.10.1994**
(21) Application number: 89200528.1
(22) Date of filing: 03.03.1989
(51) Int. Cl.: G01N 27/00, G01N 27/06, G01N 27/416

(54) **Electrochemical sensor and method**
Elektrochemischer Fühler und Verfahren
Capteur et méthode électrochimique

(30) Priority: 15.03.1988 GB 8806145
(43) Date of publication of application: 20.09.1989
(73) Proprietor: UNILEVER N.V., 3013 AL Rotterdam (NL); UNILEVER PLC, London EC4P 4BQ (GB)
(72) Inventor: Birch, Brian Jeffrey, Chelveston Northants (GB); Marshman, Clive Edward, Pertenhall Bedfordshire (GB)
(74) Representative: Kan, Jacob Hendrik, Dr.

(56) References cited:
- EP-A- 0 218 530
- US-A- 4 216 069
- Solid State Chemical Sensors, edited by Janata, J., and Huber, R., Academic Press, Inc., 1985, pages 80 and 153

## Description

This invention relates to the electrochemical determination of chemical species, especially reducible or oxidisable species, and to electrochemical sensors. The reducible or oxidisable species may be oxidising agents, reducing agents, or species acted on by such agents. The chemical species may in particular be peroxyacids, especially percarboxylic acids.

Electrochemical determination of the concentration of oxidisable or reducible species can be performed by determining the redox potential. This is dependent on concentration of all species present and capable of reaction on the electrodes employed. Because of this sensitivity to all species it may not be possible to use determination of redox potential to obtain a direct measurement of concentration of a species of interest when an interfering species is present.

Percarboxylic acids, for instance, are accompanied by hydrogen peroxide which is frequently used to form them and is in equilibrium with them: 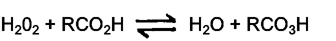 Redox potential determination cannot be used directly to measure concentration of such peracids because it will not be able to ignore the hydrogen peroxide which is present and may be in large, variable amounts.

The usual method of measuring peracid concentration is by titration by the method of Greenspan et al. Anal. Chem. 20, 11, p. 1061 (1948). This employs a titrant which is not much affected by hydrogen peroxide.

A method of determination has been proposed in which a sample of peracid solution is reacted with an excess but known amount of potassium iodide, after which a redox cell which is sensitive to potassium iodide but not hydrogen peroxide is used to determine the amount of potassium iodide remaining, permitting the amount of peracid to be calculated. Such a method does not, of course, enable a continuous reading to be given, since it necessarily requires abstraction and treatment of samples.

Another technique for determining peracid concentration, which also requires abstraction and treatment of samples, is a technique using a "redox sensitive dye", namely potassium titanium oxalate. Samples are treated with known amounts of this dye. At room temperature the colour achieved is dependent on the concentration of hydrogen peroxide only. At an elevated temperature it is dependent on the concentration of both hydrogen peroxide and peracid. Colours are determined with a colorimeter, and peracid concentration can be calculated.

By contrast with these elaborate techniques, the present invention uses a method which enables readings to be made without adding any reagents and (if desired) without removing a test sample from the bulk. The invention is not restricted to peracid determination although it is useful for this.

Broadly, the present invention provides a method of electrochemical measurement - especially measurement of the concentration of an oxidisable or reducible species in a solution - comprising determining flow of current in a circuit containing an electrode immersed in a test solution but covered by a porous insulator directly superimposed on the electrode and separating the electrode from direct contact with the solution.

Generally this electrode is held at a predetermined potential relative to a reference electrode in contact with the solution. The reference electrode may, for instance, be a conventional silver/silver chloride electrode with a KCI salt bridge.

For specific applications, such as measuring peracid concentrations in solutions containing high, relatively constant amounts of hydrogen peroxide, a gold redox electrode in direct contact with the solutionmay be used as a reference electrode. This is advantageous from an economic and manufacturing point of view, since both electrodes may then be made of the same material.

The operation potential of the reference electrode may be a constant potential, although it is within the scope of the invention to make measurements at more than just a single fixed potential.

By choice of a suitable electrode material and suitable applied potential, it is arranged that the current is proportional to the concentration of the desired species. Thus, for peracid determination, a gold electrode is employed at a potential at or close to 0 volts. Then the current at this electrode is directly dependent on peracid concentration and hydrogen peroxide has little or no interfering effect.

It is possible to use a two electrode system in which current flows through the reference electrode. Usually, however, a third electrode is also present. This is a counter electrode, and current flow is principally between this electrode and the working electrode covered with porous insulator while minimal current flows at the reference electrode. Preferably, the sensor and the counter electrode are formed of noble metal, e.g. gold.

A preferred method, therefore, is an amperometric method which comprises:
exposing three electrodes to a solution containing the species to be determined, the said electrodes being a reference electrode, a counter electrode and a working electrode covered by a said porous insulator,
applying a potential difference to counter and working electrodes and regulating the potential difference to maintain a predetermined potential difference between the reference electrode and the working electrode, and determining the current at the working electrode.

Current flow at the electrode depends linearly on concentration, and depends on rate of diffusion of the relevant species to the electrode. Without the porous insulating covering, a boundary layer of reacting ions or molecules will build up around the electrode, but this layer will vary unpredictably as liquid flows past the electrode, giving unpredictable variation in current flow.

The porous covering is believed to restrict diffusion to the electrode and thereby make the rate of diffusion dependent almost entirely on the thickness and porosity of the covering. The effects of any boundary layer and/or variation in boundary layer thickness become negligible. Diffusion is rendered an invariant effect, and the current is therefore approximately linearly dependent on concentration.

Preferably the porous insulator is in the form of a layer, and particularly preferred is a layer directly over an electrode which is itself a conductive layer on an insulating substrate. A working electrode covered by a porous insulating layer, and a counter electrode, may both be provided on a common substrate - such is a preferred sensor for use in the method of this invention.

Another factor affecting current flow is temperature. It is therefore very desirable to observe the temperature of the test solution, and correct the determination of concentration appropriately. The relationship of current flow to temperature can be determined experimentally: it may well be a linear relation. Observed concentrations can be corrected using the experimentally determined relationship or automatic temperature correction can be carried out by electronic equipment connected to the sensor.

The invention may be applied to the measurement of the concentration of aliphatic peracids but can also be employed to measure concentrations of other reducible or oxidisable chemical species, with appropriate selection of electrode materials and applied potentials.

The method of this invention may in particular be utilised for in situ measurement of percarboxylic acid, such as peracetic acid or performic acid. The electrode covered by porous insulator may be located in a system generating or using percarboxylic acid and the method of this invention employed to determine the prevailing concentration of percarboxylic acid in the region of the electrode.

More specifically, three electrodes including one covered by porous insulator may be fitted into a wall of a vessel or pipework which is periodically treated with a solution of percarboxylic acid to disinfect the vessel or pipework, or fitted into a wall of a vessel or pipework of equipment which supplies the percarboxylic acid. This equipment may be apparatus as described and claimed by our co-pending European application 87.310410.3.

We have found that with peracetic acid the current at the working electrode is dependent on pH of the solution as well as on concentration of peracid and temperature. The relationship can be determined experimentally with solutions of known pH and peracetic acid concentration.

When the observed current does vary slightly with the concentration of another apecies as in this instance, a measuring sensor for that species may be provided at the same location as the three electrodes.

Asecond aspect of the invention ia concerned with an advantageous electrode construction. In this second aspect there is provided an electrochemical sensor comprising one or a plurality of electrodes in the form of areas of metal-containing layer on an inaulating substrate, with at least one of the electrode areas covered by a porous insulator directly superimposed thereon.

Preferably the areas of metal-containing layer are applied by printing and comprise metal particles in a matrix bonded to the substrate.

The substrate may be a ceramic material onto which areas of metal-containing layer are applied by printing a composition which is then fired to form a permanently attached layer. The porous covering may be formed by printing or coating a composition which includes a thermally decomposable compound which liberates a gas during heating to fire this composition. Glass layers made porous in this way are known, and other routes to porous glass layers exist as well.

Preferably the substrate has applied to it areas to form at least two electrodes, at least one of which is then covered with porous insulator.

In an advantageous development the substrate is additionally printed with one or more additional items which may be:
(i) a metal-containing area to act as a resistance thermometer (temperature dependent resistance) and thereby provide a temperature sensor,
(ii) areas of dissimilar metals, which contact each other to provide a thermocouple, i.e. another form of temperature sensor,
(iii) an area of metal to form a further electrode.

It is advantageous to provide a temperature sensor on the same substrate as electrode areas. As mentioned above, the current observed by the sensor will depend on temperature as well as on concentration of the species being determined, making it necessary to determine temperature at the electrode.

As an alternative to a ceramic substrate, the substrate could be an organic polymer, with the electrode area(s) again applied by printing (e.g. printing with a dispersion of metal particles in a polymer). In either case a porous insulating covering could be provided by a porous polymer layer.

Conveniently a number of sensors are made simultaneously on a single piece of substrate which is then split up to separate the individual sensors from each other.

Embodiments of this invention will now be described by way of example, with reference to the accompanying drawings in which:
Fig. 1 illustrates patterns printed onto a substrate;
Figs 2, 3 and 5 illustrate part of further patterns;
Fig. 4 illustrates a composite pattern of an electrode assembly bui up from the patterns of Figs 1, 2, 3 and 5;
Fig. 6 is a diagrammatic cross section through the finished assembly, on line VI - VI of Fig. 4 and with thicknesses exaggerated;
Fig. 7 shows the first pattern for one electrode assembly, which is a second embodiment;
Fig. 8 shows the first and second patterns for this embodiment;
Fig. 9 shows the insulator patterns for this embodiment;
Figs 10 and 11 are longitudinal and transverse sections through a pipe to which a sensor is fitted; and
Fig. 12 is a circuit diagram.

Preparation of electrode assemblies commences with a substrate which is an inert ceramic sheet consisting principally (96%) of alumina. Alumina sheet is available from various suppliers. A suitable aheet is available from the Japanese company Kyocera, under their designation A476. Four electrode assemblies are printed side by side on this. The dividing lines between them are indicated by arrows A-A.

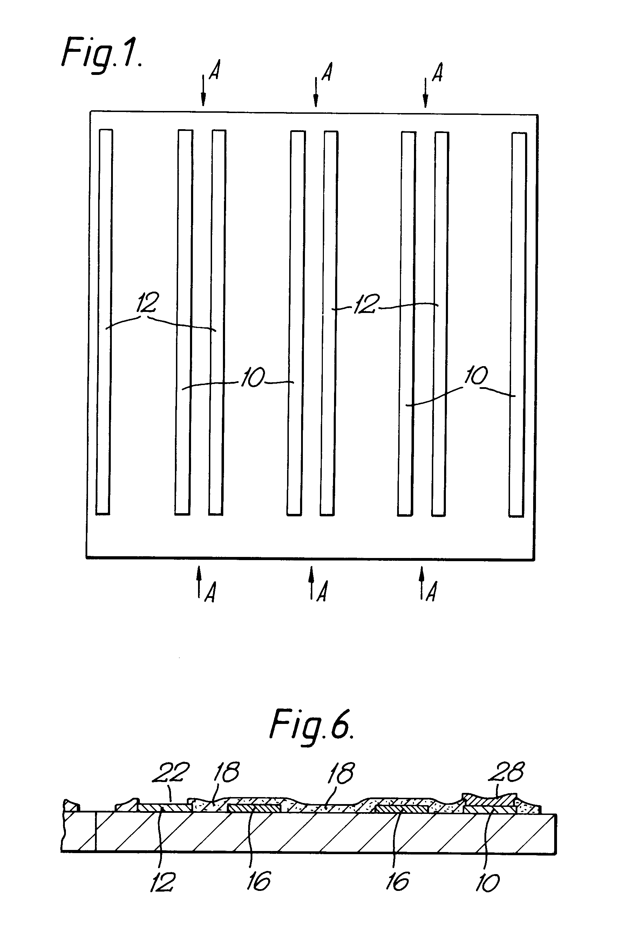

A pattern of gold ink as shown in Fig. 1 is screen printed onto the substrate. The gold ink contains gold, glass frit and a reactive component all dispersed in an organic matrix of solvent and binders. A suitable ink is Englehard 4474 available from Englehard Sales, Cinderford, Glos., England. As can be seen from Fig. 1 the pattern consists of rectangular strips 10, 12 repeated four times. These strips provide working and counter electrodes.

The printed pattern is dried at 100-120°C for ten minutes to remove solvent, then progressively heated to a firing temperature of 80°C and cooled again, in accordance with the the ink manufacturer's recommendations. The organic matrix boils or burns away, and the remaining materials form a thick film fused with the substrate. This film contains about 70% by weight of gold particles of about 10 micron diameter, glass frit and the residue of the reactive component which is usually a boron compound and binds the glass, metal particles and substrate together. Inks without a reactive component are also known, and available from various suppliers.

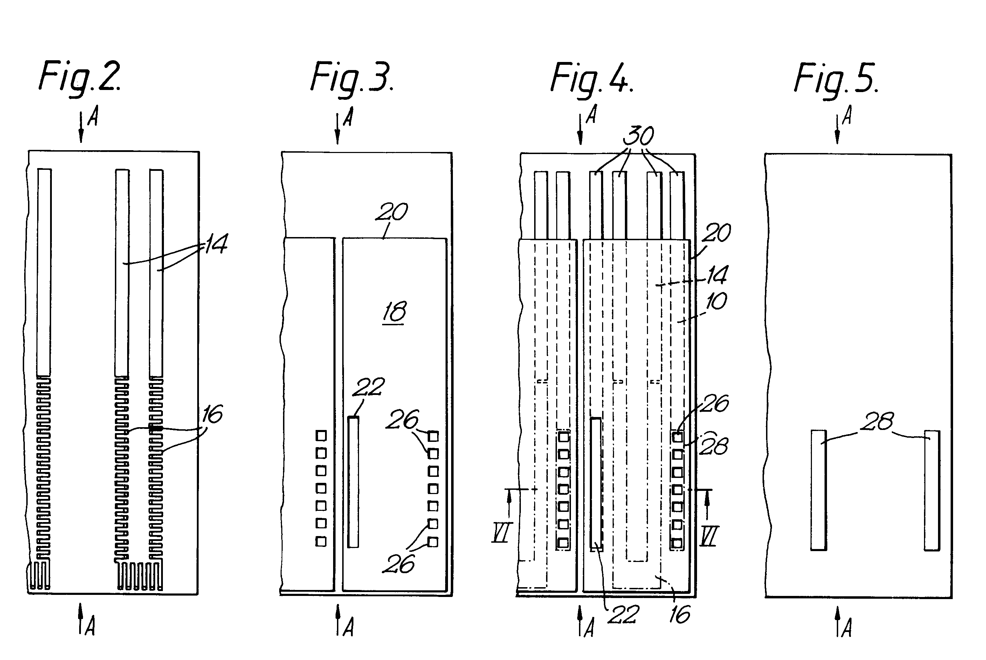

Next, a further metal is printed in the pattern shown in Fig. 2. This pattern has rectangular strips 14 which will provide connections and a serpentine portion 16 which provides a temperature dependent resistance to be used as a resistance thermometer. The metal for this pattern may be platinum, nickel, gold or an alloy of some or all of these metals. The metal is printed in the same manner as for the gold pattern, but with a different metal in an ink which is similar in other respects. If the metal is an alloy, a mixture of inks is made and printed. The pattern which has been printed is dried and fired as before. The metal or metal alloy is chosen to give the desired temperature co-efficient of resistance.

In the event that the pattern of Fig. 2 is gold only, then it can of course be printed simultaneously with the pattern of Fig. 1.

The next stage is to apply an impermeable insulating layer 18 with the pattern shown in Fig. 3. This is applied by printing the pattern using an ink containing alumina and glass frit in an organic matrix, drying at 100-120°C, printing the same pattern again with the same ink, drying again and firing at 80°C. The value of printing the pattern twice is that the second layer will seal any pin holes in the first layer.

The composite pattern which has now been applied is shown in Fig. 4. This is a rectangle, whose outline is indicated by numeral 20. Through it are a rectangular window 22 and a succession of small square windows 26. As can be seen, the gold strip 12 which provides the counter electrode is exposed at rectangular window 22. The gold strip which provides the working electrode is exposed at the succession of squares 26.

These squares 26 are next covered by over printing with a porous insulating material 28 in the simple rectangular pattern of Fig. 5, which is shown by chain lines on Fig. 4. The ink for this pattern contains glass frit, alumina and calcium carbonate, all contained within an organic matrix. The ink is dried and fired as before. During firing the calcium carbonate decomposes, evolving minute bubbles of carbon dioxide which percolate through the molten glass layer so that after firing this layer is porous. Porous inks of this type are known for other purposes and available from various suppliers. We prefer an ink from Agmet Ltd, Reading, England, designated by them 4901 S.

The area of strips 10, 12 and 14 which are exposed at 30will serve as connections. Palladium/silver alloy is printed onto these areas 30 to facilitate soldering to them. The substrate is sawn or broken along lines between the arrows A- A to form four individual electrode assemblies. Connecting leads are soldered to the areas 30 of each assembly.

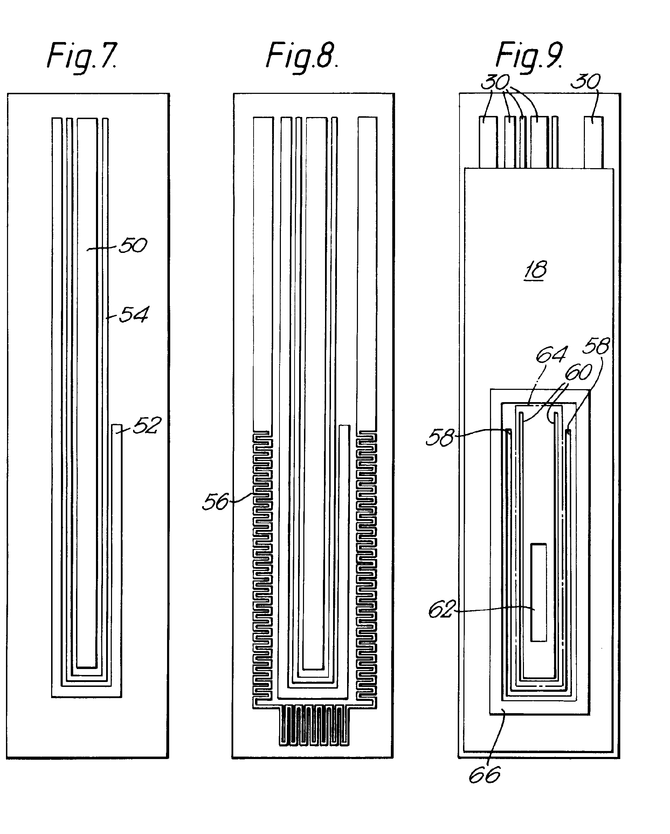

Figs 7, 8 and 9 illustrate a second embodiment which is made by a similar procedure but has slightly more complicated patterns. As shown in Fig. 7 the initial gold pattern which is printed includes a straight rectangular strip 50 which provides the working electrode, a J-shaped strip 52 which provides the counter electrode, and a U-shaped thin strip 54 which forms a guard electrode (fourth electrode).

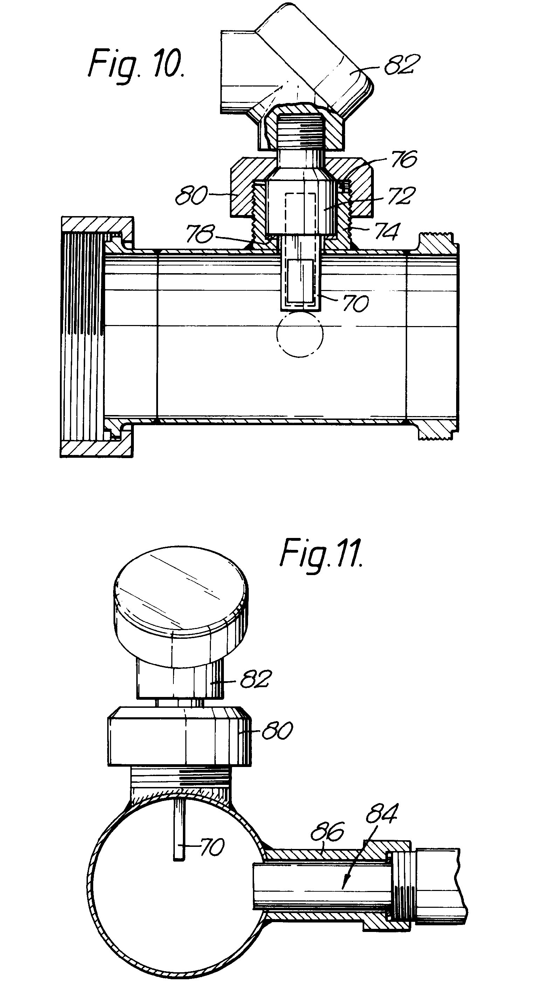

At the next stage a strip including a serpentine pattern 56 is printed to provide a temperature dependent resistance. Then, in the next stage, impermeable insulating material 18 is printed over these strips in a pattern which leaves the counter electrode exposed through a U-shaped window 58, the guard electrode exposed through a U-shaped window 60 and the working electrode 50 exposed through a rectangular window 62. The windows 60, 62 which expose the guard electrode and working electrode are then covered by a rectangular area of porous insulating material which is the same as the material 28 described above. Its outline is indicated as chain dotted rectangle 64 in Fig. 9. Next, as before, the exposed areas of the various conductors are printed with palladium/silver alloy to facilitate soldering to them. After this a rectangular band 66 of two layers of the impermeable insulating material is printed around the area at which the electrodes are exposed. This rectangular band is a "levelling ring" whose purpose is to give a good seal in the mould when the electrode assembly is encapsulated.

As before, four electrode assemblies are printed side by side simultaneously, whereafter the slab of substrate is subdivided so as to give four individual electrode assemblies.

After having been fabricated in the manner described, the electrode assembly shown by Figs 1-6 or the electrode assembly shown by Figs 7, 8 and 9 is encapsulated with epoxy resin which is cast into a shape enabling attachment to a vessel or pipe.

The electrode assembly is placed in a mould lined with polytetrafluoroethylene. A pad of this material or of silicone rubber is pressed onto the exposed electrode areas to prevent them from being contacted by the epoxy resin. Epoxy resin precursors which have been mixed, de-aerated and warmed to about 35°C are injected into the mould which is itself preheated to about 40°C. The filled mould is de-aerated in a vacuum des- sicator and then kept at 60°C for 2 hours to cure the epoxy resin.

As shown by Figs 10 and 11 the generally planar assembly 70 is moulded into a cylindrical plug 72 of the epoxy resin. This plug is shaped so that it can be fitted into a boss 74 welded to a pipe with the electrode area of the sensor exposed to the pipe interior. The plug 72 incorporates a peg 76 which engages a cut-out in the boss and thereby locates the plug such that the plane of the assembly 70 is aligned with flow in the pipe. A sealing ring 78 is provided between the plug and the boss and the plug is retained in the boss by means of a screw cap 80. Connecting leads (not shown) which are soldered to the exposed metal portions 30 runs through the encapsulating resin into a waterproof cable connector 82 fitted over the outer portion of the plug 72. Within this cable connector the leads are connected to an external cable (not shown) leading away to control equipment. (In Figs 10 and 11 the cable connector is represented by an outline diagrammatic shape only). The encapsulated electrode assembly provides working electrode and counter electrode for an amperometric measurement. A reference electrode is provided by a standard commercial silver/silver chloride electrode 84 fitted to a second boss 86 welded to the pipe section at 90° to the boss 74 as best seen in Fig. 11.

Fitting electrodes to a length of pipe in this manner enables the concentration of percarboxylic acid in a solution in the pipe to be measured, without needing to take any sample out of the pipe. The pipe could, for example, be part of apparatus generating percarboxylic acid solution, perhaps as a cleaning solution. Alternatively the pipe could be part of apparatus which is being cleaned with a percarboxylic acid-containing cleaning solution.

When the percarboxylic acid is to be peracetic acid, or whenever a pH measurement is required, a pH electrode may be fitted to a boss similar to the second boss 56 and welded to the pipe section, e.g. at a position diametrically opposite to the boss 86.

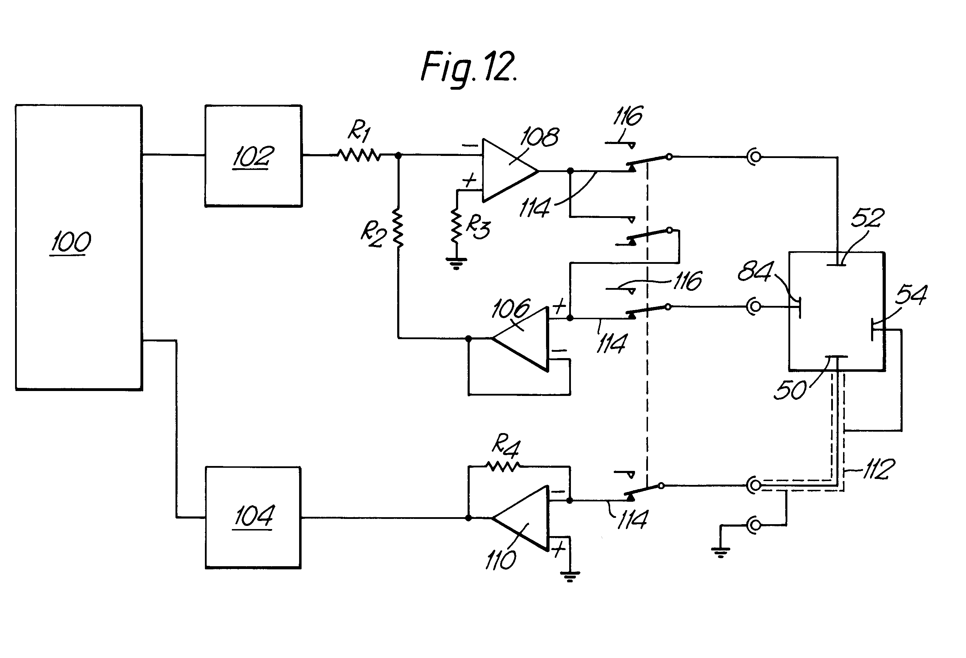

Fig. 12 shows a block diagram circuit arrangement for operating the sensor shown in Figs 7 to 9. The circuit arrangment includes a micro-processor based controller 100; a digital-to-analog converter 102; an analog-to-digital converter 104; an operational amplifier 106, connected as a voltage follower; an operational amplifier 108, acting as a summing amplifier; an operational amplifier 110, connected as a current follower; and resistors R1 to R4.

The sensor is operated by the micro-processor based controller 100 which provides an output to the digital-to-analog converter 102, and which receives an input from the analog-to-digital converter 104.

The electrodes are connected to a potentiostat circuit constituted by the operational amplifiers 106 and 108. This circuit is of a known type. The reference electrode is connected to the non-inverting input of the operational amplifier 106. An output of this operational amplifier is connected to its inverting input, so that the amplifier effectively acts as a voltage follower. The output of the operational amplifier 106 is connected to the inverting input of the operating amplifier 108 through the resistor R2. Also connected to this same inverting input is the analog output from the converter 102 through the resistor R1. The non-inverting input of the operational amplifier 108 is connected to earth via the resistor R3, so that the amplifier effectively acts as a summing amplifier to sum the analog inputs to its inverting input. The output of the summing amplifier 108 is applied to the counter electrode 52.

The operation of the above-described potentiostat circuit is based on the assumption that there is an equivalent impedance Z1 between the counter and reference electrodes 52 and 84 due to the interfacial impedances of the electrodes and the resistance of the solution, and likewise an equivalent impedance Z2 between the reference and working electrodes 84 and 50 due to the interfacial impedances of the elctrodes and the resistance of the solution.

The effect of the potentiostat circuit is to regulate potential of the counter electrode in such a manner that the potential of the working electrode is maintained at a fixed potential relative to the solution. This fixed potential is determined by the voltage output from the digital-to-analog converter 102.

Accordingly the microprocessor is programmed so that when a measurement is made, it sets the voltage output from the digital-to-analog converter 102 at a level which will in turn set the potential of the working electrode.

The operational amplifier 106 which acts as a voltage follower ensures that the reference electrode 84 is not required to carry any substantial current, and this operational amplifier itself supplies the current fed into the summing point of the operational amplifier 108.

A booster (not shown) in the form of a non-inverting amplifier may be inserted between the output of the summing amplifier 108 and the counter electrode 52.

The working electrode 50 is connected to the inverting input of the operational amplifier 110, together with a feedback from its output through the resister R4. The non-inverting input of the operational amplifier is connected to earth so that the amplifier operates as a current follower, and provides a voltage signal representing the current at the working electrode 50. The output of the operational amplifier 110 is connected to the input of the analog-to-digital converter 104.

The lead from the working electrode 50 is screened and the ground electrode 54 is connected to this screen. The ground electrode therefore acts to block any leakage current between the counter and working electrodes which might otherwise flow within the electrode assembly (i.e. under the insulating layer 18).

The electrodes are connected to the circuit via contacts 114 of a relay, operated by the microprocessor. This relay allows the electrodes to be disconnected when a measurement is not being made.

When a measurement is not being made, the alternative contacts 116 of the relay may be used to supply a different voltage to the electrodes: specifically, the counter and working electrodes may be connected to a source of alternating voltage at a time when a measurement is not being made, to effect electrolysis of the surrounding solution, liberate a small amount of gas, and thereby clear unwanted deposits from the electrodes. The microprocessor control may be arranged to do this once a day for instance.

In a further development of the invention provision is made to apply a direct voltage to the counter and working electrodes 52, 50 before a measurement is made, to clear deposits and bring their surfaces to a more repeatable condition before a meaaurement is made. This direct current can also be applied via relay contacts 116.

## Claims

1. A method of determining concentration of an oxidisable or reducible chemical species in a solution, comprising determining flow of a current in a circuit containing an electrode (70) immersed in a test solution, whereby the said electrode is maintained at a predetermined potential relative to a reference electrode (84) in contact with the solution, characterised in that the electrode is covered by a porous insulator directly superimposed on the electrode and separating said electrode from direct contact with the test solution.

2. A method according to claim 1, wherein the said electrode is maintained at a predetermined potential relative to a reference electrode in contact with the solution.

3. A method according to any one of the preceding claims, carried out with a sensor providing the said electrode covered by a porous insulator, and a counter electrode, on a common substrate.

4. A method according to any one of the preceding claims, wherein the method comprises exposing three electrodes to a solution containing the species to be determined, the said electrodes being a reference electrode, a counter electrode and a working electrode covered by a said porous insulator, applying a potential difference to counter and working electrodes and regulating the potential difference to maintain a predetermined potential difference between the reference electrode and the working electrode, and determining the current at the working electrode.

5. A method according to claim 4, further compriaing deriving a voltage signal representing the current at the working electrode.

6. A method according to any one of the preceding claims, employed for measuring the concentration of a percarboxylic acid.

7. An electrochemical sensor comprising one or a plurality of electrodes in the form of areas of metal-containing layer on an insulating substrate, with at least one of the electrode areas covered by a porous insulator directly superimposed thereon.

8. A sensor according to claim 7, having two electrode areas in which the metal is gold, with an insulating porous layer over at least one said electrode area.

9. Asensor according to claim 7 or claim 8, having a further metal-containing area layered on said substrate and which provides a resistance thermometer.

10. Asensor according to claim 7 or claim 8, having areas containing dissimilar metals layered onto said substrate and in contact with one another to form a thermocouple.

## Patentansprüche

1. Verfahren zur Messung der Konzentration einer oxidierbaren oder reduzierbaren chemischen Spezies in einer Lösung, das die Messung einer elektrischen Stromstärke in einer Schaltung aufweist, die eine in eine Prüflösung eingetauchte Elektrode (70) enthält, wobei die Elektrode auf einem vorgegebenen Potential relativ zu einer Referenzelektrode (84) in Kontakt mit der Lösung gehalten wird, dadurch gekennzeichnet, daß die Elektrode von einem porösen Isolator bedeckt ist, der direkt der Elektrode überlagert ist und der die Elektrode gegen direkten Kontakt mit der Prüflösung schützt.

2. Verfahren nach Anspruch 1, wobei die Elektrode auf einem vorgegebenen Potential relativ zu einer Referenzelektrode in Kontakt mit der Lösung gehalten ist.

3. Verfahren nach irgendeinem der vorangehenden Ansprüche, welches mit einem Fühler ausgeführt wird, der die vom porösen Isolator bedeckte Elektrode und eine Gegenelektrode auf einem gemeinsamen Substrat aufweist.

4. Verfahren nach irgendeinem der vorangehenden Ansprüche, wobei das Verfahren aufweist: das Aussetzen dreier Elektroden einer die zu bestimmenden Spezien enthaltenden Lösung, wobei diese Elektroden eine Referenzelektrode, eine Gegenelektrode und eine vom porösen Isolator bedeckte Arbeitselektrode sind, das Anlegen einer Potentialdifferenz zwischen der Gegen- und der Arbeitselektrode und die Regelung dieser Potentialdifferenz, um eine vorgegebene Potentialdifferenz zwischen der Referenzelektrode und der Arbeitselektrode aufrechtzuerhalten, und die Messung des Stroms in der Arbeitselektrode.

5. Verfahren nach Anspruch 4, welches weiterhin die Ableitung eines den Strom in der Arbeistelektrode darstellenden Spannungssignals aufweist.

6. Verfahren nach irgendeinem der vorangehenden Ansprüche, welches für die Messung der Konzentration einer Percarbonsäure angewendet wird.

7. Elektrochemischer Fühler, der eine oder eine Vielzahl von Elektroden in der Form von Bereichen einer Metall enthaltenden Lage auf einem Isoliersubstrat aufweist, von denen zumindest einer der Elektrodenbereiche von einem porösen, direkt darüberliegenden Isolator bedeckt ist.

8. Fühler nach Anspruch 7, der zwei Elektrodenbereiche hat, in denen das Metall Gold ist, mit einer isolierenden porösen Lage über mindestens einem dieser Elektrodenbereiche.

9. Fühler nach Anspruch 7 oder 8, der einen weiteren Metall enthaltenden Bereich hat, der auf dem Substrat aufliegt und der einen Widerstandsthermometer bildet.

10. Fühler nach Anspruch 7 oder 8, der ungleiche Metalle enthaltende Bereiche hat, die auf dem Substrat aufliegen und in Kontakt miteinander stehen, um ein Thermopaar zu bilden.

## Revendications

1. Procédé de détermination de la concentration d'un composant chimique oxydable ou réductible dans une solution, qui comprend la détermination du passage d'un courant dans un circuit contenant une électrode (70) immergée dans une solution de test, de sorte que ladite électrode est maintenue à un potentiel prédéterminé par rapport à une électrode de référence (84) en contact avec la solution, caractérisé en ce que l'électrode est recouverte d'un isolant poreux directement superposé à l'électrode et séparant ladite électrode d'un contact direct avec la solution de test.

2. Procédé selon la revendication 1, dans lequel on maintient ladite électrode à un potentiel prédéterminé par rapport à une électrode de référence en contact avec la solution.

3. Procédé selon la revendication 1 ou 2, qu'on effectue à l'aide d'un détecteur assurant que ladite électrode recouverte d'un isolant poreux et une contre-électrode soient sur un substrat commun.

4. Procédé selon l'une quelconque des revendications précédentes, dans lequel on expose trois électrodes à une solution contenant le composant à déterminer, lesdites électrodes étant une électrode de référence, une contre-électrode et une électrode fonctionnelle recouverte par ledit isolant poreux, on applique une différence de potentiel à la contre-électrode et à l'électrode fonctionnelle et on règle cette différence de potentiel de façon à maintenir une différence prédéterminée de potentiel entre l'électrode de référence et l'électrode fonctionnelle et on détermine le courant à l'électrode fonctionnelle.

5. Procédé selon la revendication 4, qui consiste encore à dériver un signal de tension représentant le courant à l'électrode fonctionnelle.

6. Procédé selon l'une quelconque des revendications précédentes, qu'on utilise pour mesurer la concentration d'un acide percarboxylique.

7. Détecteur électrochimique comprenant une ou plusieurs électrode(s) sous forme de zones d'une couche contenant un métal sur un substrat isolant, au moins une des zones d'électrode étant recouverte d'un isolant poreux directement superposé sur cette zone.

8. Détecteur selon la revendication 7, comportant deux zones d'électrode dont le métal est l'or, une couche poreuse isolante étant superposée sur au moins l'une desdites zones d'électrode .

9. Détecteur selon la revendication 7 ou 8, comportant une autre zone contenant un métal étalée sur ledit substrat et fournissant un thermomètre de résistance.

10. Détecteur selon la revendication 7 ou 8, comportant des zones qui contiennent des métaux dissimilaires étalées sur ledit substrat et en contact les unes avec les autres pour former un thermocouple.
